# EUROPEAN PATENT SPECIFICATION

(11) **EP 1 683 645 B1**
(45) Date of publication and mention of the grant of the patent: **17.11.2010**
(21) Application number: 05290166.7
(22) Date of filing: 25.01.2005
(51) Int. Cl.: B41M 5/025, B41M 3/00, B41M 5/52

(54) **Method for making tinted optical lenses**
Verfahren zur Herstellung getönter optischen Linsen
Méthode pour la fabrication des lentilles optiques teintées

(43) Date of publication of application: 26.07.2006
(73) Proprietor: ESSILOR INTERNATIONAL (Compagnie Générale d'Optique), F-94220 Charenton-le-Pont (FR); NIKON-ESSILOR CO., LTD., Tokyo 1300026 (JP)
(72) Inventor: Momma, Tsukasa, Kawasaki-shi Kanagawa (JP)
(74) Representative: Touati, Catherine

(56) References cited:
- EP-A- 0 942 298
- US-A1- 2001 004 487
- PATENT ABSTRACTS OF JAPAN vol. 2000, no. 12, 3 January 2001 (2001-01-03) & JP 2000 241601 A (HOYA CORP), 8 September 2000 (2000-09-08)

## Description

The present invention relates to methods of manufacturing optical lenses. More specifically, the present invention relates to a method of manufacturing tinted optical lenses.

In the meaning of this invention, the term "lens" means ophthalmic elements fitting for spectacles, eyeglasses, sunglasses, goggles or the like, regardless of whether it performs any correcting function.

Manufacturers have encountered numerous technical challenges when manufacturing tinted lenses. As is known in the prior art, glass lenses are often tinted by introducing colored additives to the molten glass, and similarly polycarbonate lenses are injection-moulded from pre-colored plastic granules. A disadvantage associated with these methods is the very limited flexibility in the range of colors that can be offered. Moreover, lenses with highly varying thickness also exhibit non-uniform transmittance when colored by this method.

Another prior art process consists in dipping hard resin lenses into a hot, liquid dye solution. The dyes enter into the resin, thus resulting in coloring the lens. However, this process makes it difficult to achieve tint uniformity and shows poor color reproducibility.

One proposal in the prior art to overcome some of the problems associated with lens tinting is to apply a material able to receive the tint ; such material may be a thin film coated onto an essentially transparent substrate. For example, JP3075403 and JP3349116 describe a method of making a tinted plastic lens, comprising the steps of forming a hardening coating of a water-soluble polymer on the surface of the optical substrate of the lens, applying on said coating an ink aqueous solution containing disperse dyes, by means of an ink jet printer, heat treating, and finally removing, by rinsing, the water-soluble polymer coating.

The Applicant observed that, in the process described in the aforementioned Japanese documents, contacting the water-soluble polymer with the ink solution results in that the ink solution flows downward the curved substrate by gravitation to the centre or to the edges of the substrate, before the ink enters into the water-soluble polymer coating: this method does not allow the application of a large quantity of ink and results in a poor uniformity of tint of the lens. The remaining ink solution is diluted in the water-polymer film, and makes it difficult to obtain high color intensity.

US 2001/0004487 discloses an ink-jet material comprising a support, a first layer containing fine solid particles and a polymer latex or a resin emulsion, and a second layer containing fumed silica formed on said first layer. The porous bilayered film is not used for temporarily absorbing an ink containing a dye which is then transferred by sublimation to the underlying support.

EP 0 942 298 discloses a method for tinting optical lenses in which an ink solution is applied by an inkjet printer directly onto the lens. The lens is not previously coated with a polymeric ink-receiving film.

Therefore, there is an actual need in new methods, industrially effective, for tinting optical lenses, which would not have the drawbacks of the prior art systems.

This invention relates to a method for tinting an optical lens, including
- coating the substrate of said optical lens with a layer of a liquid ink receptor material capable to form a porous ink-receptor film, said liquid ink receptor material comprising an inorganic filler selected from light calcium carbonate, heavy calcium carbonate, kaolin, talc, titanium dioxide, zinc oxide, zinc carbonate, satin white, magnesium carbonate, magnesium silicate, magnesium sulphate, calcium silicate, aluminium silicate, aluminium hydroxide, alumina sol, colloidal alumina, alumina hydrate, zeolite, silica, colloidal silica, and a mixture thereof, and a water-based emulsion of a water-insoluble polymer, said water based emulsion being selected from vinyl acetate emulsion, ethylene vinyl acetate emulsion, acrylic emulsion, silica acrylic emulsion, urethane emulsion, polyester emulsion, chloroprene rubber latex, butadiene latex, isoprene rubber latex, epoxy resin emulsion, a polyolefin emulsion, fluorocarbon resin emulsion, and acrylic silicone emulsion.;
- evaporating solvents present in the ink receptor material, to form on said substrate said porous ink-receptor film;
- applying an ink solution using an ink-jet machine on said porous film, in such conditions that the ink solution is absorbed within the film;
- heating the said optical lens so as to allow the sublimation of the dyes contained in the ink and the transfer of the color into the substrate until the substrate has attained the desired tint; and
- removing the ink receptor film.

The ink receptor material comprises an inorganic filler and a water-based emulsion (which contains a water-dispersed polymer, said polymer being non soluble in the water), which have been mixed and form a solution. The ink receptor material is able to form a porous film, the water-dispersed polymer helping for the adhesion of the film to the substrate. The ink receptor material can be applied on a three dimensional surface like a convex or concave surface of an optical lens and forms, after evaporation of the solvents, a porous film on the surface of the substrate.

The presence of the inorganic filler plays an important role in the porosity of the film. The porous film of the invention will allow a capacity phenomenon to occur, when the liquid ink is applied on it, thus enhancing the quantity of ink capable to penetrate into the film.

Preferably, the inorganic filler is silica, alumina, or calcium carbonate.

Advantageously, the inorganic filler have a particle size of 0.05 µm to 8 µm.

Preferably, the water-based emulsion is a urethane emulsion. The water-based emulsion has an anchoring effect, and plays a role in the adhesion of the film to the substrate.

According to an embodiment of the invention, the ink receptor material comprises the inorganic filler and the water-based emulsion in a ratio of 1: 0.1 to 1: 50 by weight.

The ink receptor material may optionally comprise a water-soluble polymer. The water soluble polymer, when is present, contributes to provide a good adhesion between the water-based emulsion and the inorganic filler and acts as a protective colloid in the ink receptor. Preferably, the water soluble polymer contained in the ink receptor material is carboxymethyl cellulose, hydroxyethyl cellulose, methyl cellulose, polyvinyl alcohol, polyacrylic acid, polyacrylic acid metal salt, polyacrylamide, polyvinyl pyrrolidone, or polyethylene glycol. Preferably, the water soluble polymer is polyvinyl alcohol.

According to an embodiment of the invention, the ink receptor material comprises at least one inorganic filler, at least one water-based emulsion and at least one water soluble polymer in a ratio inorganic filler/water-based emulsion/ water soluble polymer of 1 / 0.1 to 50 / 0 to 50 respectively.

In still another embodiment of the invention, the ink receptor material may also comprise one or more carrier(s) able to accelerate the absorption of the ink into the substrate. According to an embodiment of the invention, carrier(s) included in the ink receptor material is (are) o-phenylphenol, chlorobenzene, methylsalicylate, dimethylterephthalate, butyl benzoate, benzyl alcohol, or phenethyl alcohol.

According to another embodiment of the invention, the ink receptor material may also comprise a modified cationic polymer, which helps preventing the migration and/or the clogging in the film, of the dispersed dye particles present in the ink receptor material. Preferably, the modified cationic polymer contained in the ink receptor material is obtained from the polymerisation or copolymerisation of the monomers having a quaternary ammonium side chain. The preferred monomers are a quaternary ammonium derivative of amino-alkyl-ester-acrylate or amino-alkyl-ester-methacrylate, a quaternary ammonium derivative of N,N-dimethylaminoethyl acrylate which is modified with methyl chloride or dimethyl sulfate. More preferred monomers are quaternary ammonium derivative of N-[3-(dimethylamino)propyl]acrylamide modified with methyl chloride, dimethyl sulfate, benzyl chloride or monochloroacetate, quaternary ammonium derivative of acrylamido-3-methyl-butyl-dimethylamine, and the monomer of vinyl-benzyl-ammonium salt or diallyl dimethyl ammonium salt having a quaternary ammonium side chain. Other preferred monomers are polyallylamine, polyethyleneimine, polyamine sulfone, polyamine-polyamide epichlorohydrin, copolymer of cationic polystyrene, cationic starch and vinyl monomer.

According to a particular embodiment of the invention, the ink receptor material comprises (a) an aqueous urethane resin, (b) a polyvinyl alcohol, (c) a modified cationic polymer, and (d) an inorganic filler. In this embodiment, advantageously, the proportions of each component on a solid basis are : (a) aqueous urethane resin : 10 to 50%; (b) polyvinyl alcohol: 0 to 60%; (c) modified cationic polymer: 0 to 30%; and the ratio of the amount of all polymers (a) - (c) and the inorganic filler is from 100:10 to 100:500 by weight.

According to another particular embodiment of the invention; the ink receptor material comprises (a) an aqueous urethane resin, (b) a polyvinyl alcohol, (c) a modified cationic polymer, (d) an inorganic filler, and (e) one or more carrier(s). In this embodiment, advantageously, the proportions of each component on a solid basis may be : (a) aqueous urethane resin: 10 to 50% ; (b) polyvinyl alcohol: 0 to 60%; (c) modified cationic polymer: 0 to 30%; (d) the ratio of the amount of all polymers (a) - (c) and the inorganic filler is from 100:10 to 100:500 by weight; and (e) carner(s): the proportion of carrier(s) to total components is from 0 to 3%.

The lenses to be tinted according to the present invention are optical lenses that mean ophthalmic lenses, which have a substrate made of an organic glass commonly used for organic ophthalmic lenses.

In step 1, the coating can be performed by any method known by the skilled person, and preferably by a method selected from spin coating, dip coating and spraying. Advantageously, the ink receptor material comprises an inorganic filler and a water-based emulsion ; more preferably, the ink receptor material is as herein described.

In step 2, the evaporation of solvents may be performed by any method known by the skilled person, but preferably comprises the following steps: (1) air-drying at room temperature; (2) heating at a temperature comprised from 40 °C to 100°C for 0.5 min to 10 min.

According to an embodiment of the invention, the ink receptor film resulting from step 2 has a thickness of 0.1 µm to 50 µm, preferably of 2 µm to 25 µm, more preferably 5 µm.

In step 3, it is preferred that the distance between the substrate and the inkjet nozzle of the inkjet machine is from 0.5 mm to 5 mm, preferably from 1 mm to 2 mm. It is observed that the ink receptor material according to the invention is not dissolved into or by the solvent of the ink, contrary to the prior art water-soluble polymer coating.

According to the present invention, the term "ink" means any colored solution in which the color transferred into the substrate by heating; more preferably the ink solution according to the invention is a solution containing dispersed dyes. Preferably, the ink solution used in the invention is an aqueous solution containing dyes dispersed therein, said dyes being sublimated when heated at the appropriate temperature.

In step 4, the heating step allows the sublimation of the dyes contained in the ink and the transfer of the color into the substrate; the heating step includes applying a temperature of 90°C to 240°C during 10 seconds to 2 hours, preferably 120°C to 180°C during 30 min to 60 min, at normal pressure or under vacuum pressure. According to an embodiment of the invention, the heating step is carried at the pressure equal or less than 300 Pa, preferably equal or less than 100 Pa. The use of vacuum conditions allows the sublimation conditions of dyes to occur at a lower temperature than when normal pressure is used; disadvantages that may occur at high temperatures, for example deformation and yellowing of the substrate may thus be avoided.

The heating step is carried out in a heating device, for example air oven, far-infrared radiation oven, infrared oven, halogen lamp heater, autoclave and the like.

In step 5, according to an embodiment of the invention, the removal of the coating includes wiping it or washing it in presence of water, acid solution or basic solution and optionally may be combined with ultrasonic cleaning.

In another embodiment, the method according to the invention is a method for tinting optical lens comprising the following step:
1. coating the substrate of said optical lens with a transparent primer coating film;
2. drying the said primer coating;
3. coating the said primer coating of said optical lens with a layer of an ink receptor material capable to form a porous ink-receptor film;
4. evaporating solvents present in the ink receptor material, to form said porous ink-receptor film on said primer coating;
5. applying an ink solution using an ink-jet machine on said porous film, in such conditions that the ink solution is absorbed within the film;
6. heating the said optical lens until the said primer coating has attained the desired tint; and
7. removing the ink receptor film.

According to this embodiment, the transparent primer coating comprises: a self-emulsifiable emulsion of a linear polyurethane and/or water-compatible polyester resin; and metal oxide colloid particles which are fine particles of at least one is selected from aluminium oxide, iron oxide, tin oxide, zirconium oxide silica oxide, titanium oxide, tungsten oxide, antimony oxide, and their composite oxides. Advantageously, the metal colloid particles are modified by an organic silane compound of formula:

R(R₁)ₐSiX_{b}

wherein:
- R represents a linear or branched (C₁-C₆)alkyl group which may be optionally substituted by a group selected from methacryloxy and glycidyloxy;
- R₁ represents a linear or branched (C₁-C₆)alkyl group;
- a is selected from 0, 1 and 2; and
- b is selected from 1, 2, and 3, with the proviso that a+b=3.

The transparent primer coating has a film thickness comprised from 0.1 µm to 100 µm. This primer coating has the advantage to protect the substrate of the lens, which can be for example very sensitive to the abrasion like polycarbonate substrate.

The following examples refer to particular embodiments of the invention and shall not be interpreted as limiting the scope of this invention.

### EXAMPLES

### EXAMPLE 1 - PREPARATION OF INK RECEPTOR MATERIALS

### Preparation of ink receptor material 1

We made an ink receptor by mixing the followings:
1. Inorganic filer: 15g of wet type silica powder "Finesil® X-30", Average particle size=3 µm (Tokuyama Corporation)
2. Water-dispersed polyurethane: 100 g of "Superflex® 420", Ester/ether type, (Dai-ichi kogyo seiyaku co., Ltd.)
3. 100 g of deionised water
4. 9 g of ethyl alcohol
5. 2 g of 1-methoxy-2-propanol

### Preparation of ink receptor material 2

We made an ink receptor by mixing the followings:
1. Inorganic filer: 15g of wet type silica powder "Finesil® X-30", Average particle size=3 µm (Tokuyama Corporation)
2. Water-dispersed polyurethane: 100 g of "Bayhydrol® VPL82952" aliphatic type (Sumitomo Bayer)
3. 100 g of deionised water
4. 9 g of ethyl alcohol
5. 4 g of 1-methoxy-2-propanol

### Preparation of ink receptor material 3

We made an ink receptor by mixing the followings:
1. Inorganic filer: 15 g of wet type silica powder "Finesil X-60", Average particle size=6 µm (Tokuyama Corporation)
2. Water-dispersed polyurethane: 100 g of "Bayhydrol® VPL82952" aliphatic type (Sumitomo Bayer)
3. 100 g of deionised water
4. 9 g of ethyl alcohol
5. 4 g of 1-methoxy-2-propanol

### Preparation of ink receptor material 4

We made an ink receptor by mixing the followings:
1. Inorganic filer: 15 g of wet type silica powder "Finesil® X-30", Average particle size=3 µm (Tokuyama Corporation)
2. Water-dispersed polyester: 100 g of "VYLON® VYLONAL® MD1985 (TOYOBO)
3. 100 g of deionised water
4. 9 g of ethyl alcohol
5. 4 g of 1-methoxy-2-propanol

### Preparation of ink receptor material 5

We made an ink receptor by mixing the followings:
1. Inorganic filer: 15 g of wet type silica powder "Finesil® X-30", Average particle size=3 µm (Tokuyama Corporation)
2. Water-dispersed polyurethane: 100 g of "Superflex® 610", Ester/ether type, (Dai-ichi kogyo seiyaku co., Ltd.)
3. Cationic polymer: 10 g of UNISENCE FPA 100L (Senka) - polymer of DADMAC (Diallyl dimethyl ammoniumchloride)
4. 85 g of deionised water
5. 9 g of ethyl alcohol
6. 2 g of 1-methoxy-2-propanol

### Preparation of ink receptor material 6

We made an ink receptor by mixing the followings:
1. Inorganic filer: 15 g of wet type silica powder "Finesil® X-30", Average particle size=3 µm (Tokuyama Corporation)
2. Water-dispersed polyester: 100 g of "VYLON® VYLONAL® MD1985 (TOYOBO)
3. Carrier: 3 g of Benzyl alcohol
4. 100 g of deionised water
5. 9 g of ethyl alcohol
6. 4 g of 1-methoxy-2-propanol

### Preparation of ink receptor material "MZ-480" (Polyurethane + Silica filler ink receptor; Maker: Takamatsu Oil and Fat)

According to the MSDS of MZ-480, the composition of the MZ-480 is:

| | |
|---|---|
| Mixture of polyvinylalcohol, polyurethane, polycationic agent and silica | 20.6% |
| N-Methyl-2-pyrrolidone | 1.1% |
| 1-Propanol | 1.3% |
| Water | 77.0% |

### EXAMPLE 2 - METHOD OF TINTING

1) The ink receptor liquids were coated on the concave sides of a substrate by a spin coating method;
2) The thus-coated lens was placed on a rubber O-ring which has the same diameter of the lens and covered with a stainless petri dish, air-dried at room temperature for 3 minutes and heat-treated at 80°C for 5 minutes, whereby an ink receptor layer was formed on the substrate;
3) the lens is kept until it is at a room temperature;
4) the coated lens is placed on a height adjustable stage of an inkjet printer "GP-604" (Mimaki Engineering Corp.);
5) Four inkjet cartridges, which contain SPC-0370C (Cyan), SPC-0370M(Magenta), SPC-0370Y(Yellow) and SPC-0370K(black) are set on the inkjet printer;
6) A figure having the same diameter than the substrate with color is drawn with a drawing software, Adobe® Illustrator® and printed on the concave surface of the lens with the inkjet printer;
7) The lens was placed on the rubber O-ring and the ink dyes were sublimated at the conditions in below table:

**Table 1: Condition of heat- treatment of the lens**

| Material | Power (dptr) | Diameter (mm) | Temperature | Pressure | Time |
|---|---|---|---|---|---|
| CR-39® | - 2.00 | 80 | 135°C | 100 Pascal | 30 min |
| MR-8 | + 5.00 | 65 | 135°C | 100 Pascal | 30 min |
| HIE | - 6.00 | 80 | 170°C | Atmosphere | 60 min |
| PC(HC) | + 0.00 | 70 | 135°C | 10 Pascal | 30 min |

| | | | | | |
|---|---|---|---|---|---|
| CR-39 : PPG material: diethyleneglycol bis(allyl carbonate) | | | | | |
| MR-8 : Mitsui material based on polythiourethane polymer | | | | | |
| HIE : Mitsui material based on episulfide polymer | | | | | |
| PC(HC) : Polycarbonate + primer coating | | | | | |

8) The lens was cooled down until it becomes at room temperature.
9) The residual on the lens surface was removed with ethyl alcohol.
10) The transmittance and cosmetic of the color lens was inspected and the results are shown in the tables below.

### EXAMPLE 3 - COSMETIC AND VISUAL TRANSMITTANCE OF THE COLORED LENSES

**Table 3-1: substrate = CR-39® Ink data of Adobe® Illustrator®: Cyan=36; Magenta=20; Yellow=24; Black=32**

| Ink receptor | Cosmetic (Color uniformity) | Visual transmittance | Thickness of ink receptor |
|---|---|---|---|
| 1 | Good | 29.4 | 6 |
| 2 | Very good | 28.5 | 5 |
| 3 | Good | 27.3 | 7 |
| 4 | Good | 26.1 | 6 |
| 5 | Good | 24.5 | 5 |
| 6 | Good | 29.1 | 6 |
| MZ-480 | Very good | 27.9 | 7 |

**Table 3-2: Substrate = MR-8 Ink data of Adobe® Illustrator®: Cyan=36; Magenta=20; Yellow=24; Black=32**

| Ink receptor | Cosmetic (Color uniformity) | Visual transmittance |
|---|---|---|
| 1 | Good | 39.8 |
| 2 | Very good | 36.8 |
| 3 | Good | 40.7 |
| 4 | Good | 42.4 |
| 5 | Good | 34.5 |
| 6 | Good | 39.2 |
| MZ-480 | Very good | 41.2 |

**Table 3-3: Substrate = HIE Ink data of Adobe® Illustrator®: Cyan=36; Magenta=20; Yellow=24; Black=32**

| Ink receptor | Cosmetic (Color uniformity) | Visual transmittance |
|---|---|---|
| 1 | Good | 37.2 |
| 2 | Very good | 34.2 |
| 3 | Good | 33.2 |
| 4 | Good | 39.1 |
| 5 | Good | 36.3 |
| 6 | Good | 36.7 |
| MZ-480 | Very good | 38.2 |

**Table 3-3: Substrate = PC(HC) Ink data of Adobe® Illustrator®: Cyan=36; Magenta=20; Yellow=24; Black=32**

| Ink receptor | Cosmetic (Color uniformity) | Visual transmittance |
|---|---|---|
| 1 | Good | 37.2 |
| 2 | Good | 34.7 |
| 3 | Good | 33.2 |
| 4 | Very good | 39.1 |
| 5 | Good | 36.3 |
| 6 | Good | 37.6 |
| MZ-480 | Good | 34.2 |

## Claims

1. Method for tinting an optical lens, including
- coating the substrate of said optical lens with a layer of a liquid ink receptor material capable to form a porous ink-receptor film, said liquid ink receptor material comprising an inorganic filler selected from light calcium carbonate, heavy calcium carbonate, kaolin, talc, titanium dioxide, zinc oxide, zinc carbonate, satin white, magnesium carbonate, magnesium silicate, magnesium sulphate, calcium silicate, aluminium silicate, aluminium hydroxide, alumina sol, colloidal alumina, alumina hydrate, zeolite, silica, colloidal silica, and a mixture thereof, and a water-based emulsion of a water-insoluble polymer, said water based emulsion being selected from vinyl acetate emulsion, ethylene vinyl acetate emulsion, acrylic emulsion, silica acrylic emulsion, urethane emulsion, polyester emulsion, chloroprene rubber latex, butadiene latex, isoprene rubber latex, epoxy resin emulsion, a polyolefin emulsion, fluorocarbon resin emulsion, and acrylic silicone emulsion.;
- evaporating solvents present in the ink receptor material, to form on said substrate said porous ink-receptor film;
- applying an ink solution using an ink-jet machine on said porous film, in such conditions that the ink solution is absorbed within the film;
- heating the said optical lens so as to allow the sublimation of the dyes contained in the ink and the transfer of the color into the substrate until the substrate has attained the desired tint; and
- removing the ink receptor film.

2. Method according to claim 1, wherein the inorganic filler is selected from silica, alumina, and calcium carbonate.

3. Method according to any of claims 1 to 2, wherein the inorganic filler have a particle size comprised of 0.05 µm to 8 µm inclusive.

4. Method according to any of claims 1 to 3, wherein the water-based emulsion is urethane emulsion.

5. Method according to any of claims 1 to 4, wherein the liquid ink receptor material comprises the inorganic filler and the water-based emulsion in a ratio of 1: 0.1 to 1: 50 by weight.

6. Method according to any of claims 1 to 5, wherein the liquid ink receptor material further comprises a water-soluble polymer.

7. Method according to claim 6, wherein the water-soluble polymer is selected from carboxymethyl cellulose, hydroxyethyl cellulose, methyl cellulose, polyvinyl alcohol, polyacrylic acid, polyacrylic acid metal salt, polyacrylamide, polyvinyl pyrrolidone, and polyethylene glycol.

8. Method according to claim 7, wherein the water-soluble polymer is polyvinyl alcohol.

9. Method according to any of claims 1 to 8, wherein the liquid ink receptor material further comprises at least one inorganic filler, at least one water-based emulsion and at least one water soluble polymer in a ratio inorganic filler/water-based emulsion/ water soluble polymer or 1 / 0.1 to 50 / 0 to 50 respectively.

10. Method according to any of claims 1 to 9, wherein the liquid ink receptor material further comprises one or more carrier(s) able to accelerate the absorption of the ink into the substrate.

11. Method according to claim 10, wherein the carrier(s) included in the ink receptor material is (are) selected from *o*-phenylphenol, chlorobenzene, methylsalicylate, dimethylterephthalate, butyl benzoate, benzyl alcohol, and phenethyl alcohol.

12. Method according to any of claims 1 to 11, wherein the liquid ink receptor material further comprises a modified cationic polymer, said modified cationic polymer being obtained from the polymerisation or copolymerisation of monomers having a quaternary ammonium side chain.

13. Method according to any of claims 1 to 12, wherein the coating is performed by a method selected from spin coating, dip coating, and spraying.

14. Method according to any of claims 1 to 13, wherein the evaporation of solvents includes a first air-drying step at room temperature; following by heating step at a temperature comprised from 40 °C to 100°C for 0.5 min to 10 min.

15. Method according to any of claims 1 to 14, wherein the ink receptor film formed onto the substrate has a thickness comprised from 0.1 µm to 50 µm.

16. Method according to claim 15 wherein the ink receptor film formed onto the substrate has a thickness comprised from 2 µm to 25 µm.

17. Method according to claim 17 wherein the ink receptor film formed onto the substrate has a thickness of 5 µm.

18. Method according to claim 1, wherein the distance between the substrate surface and the inkjet nozzle of the inkjet machine is comprised from 0.5 mm to 5.0 mm.

19. Method according to claim 18, wherein the distance between the substrate surface and the inkjet nozzle of the inkjet machine is comprised from 1 mm to 2 mm.

20. Method according to claims 1, wherein the heating step is carried out at normal pressure or under vacuum pressure conditions.

21. Method according to claim 20, wherein the pressure is inferior to 300 Pa.

22. Method according to claim 20, wherein the pressure is inferior to 100 Pa.

23. Method according to any of claims 20 to 22, wherein the heating step is carried out at a temperature comprised from 90 °C to 240°C for a time comprised from 10 seconds to 2 hours.

24. Method according to claim 23, wherein the heating step is carried out at a temperature comprised from 120°C to 180°C during 30 min to 60 min included.

25. Method according to claim 1, wherein the removal of the ink-receptor film is done by wiping it or by washing it with a solution selected from water, acid solution, and basic solution, said washing may be optionally combined with ultrasonic cleaning.

26. Method according to claim 1 further comprising the following steps of:
- Coating the substrate of said optical lens with a transparent primer coating film;
- Drying the said primer coating,

27. Method according to claim 26, wherein the transparent primer coating comprises: a self-emulsifiable emulsion of a linear polyurethane and/or water-compatible polyester resin; and metal oxide colloid particles which are fine particles of at least one is selected from aluminium oxide, iron oxide, tin oxide, zirconium oxide silica oxide, titanium oxide, tungsten oxide, antimony oxide, and their composite oxide.

28. Method according to claim 27, wherein the metal colloid particles are modified by an organic silane compound or formula:
R(R_{I})ᵤSiX_{b}
wherein:
- R represents a linear or branched (C₁-C₆)alkyl group which may be optionally substituted by a group selected from methacryloxy and glycidyloxy;
- R₁ represents u linear or branched (C₁-C₆)alkyl group;
- a is selected from 0, 1 and 2; and
- b is selected from 1, 2, and 3, with the proviso that a+b=3.

29. Method according to claim 28, wherein the transparent primer coating has a film thickness comprised from 0.1 µm to 100 µm.

## Patentansprüche

1. Verfahren zum Tönen einer optischen Linse, einschließlich
- Beschichten des Substrats der optischen Linse mit einer Schicht eines Flüssigtinten-Empfängermaterials, das fähig ist, einen porösen Tinten-Empfängerfilm zu bilden, wobei das Flüssigetinten-Empfängermaterial einen anorganischen Füllstoff ausgewählt aus leichtem Calciumcarbonat, schwerem Calciumcarbonat, Kaolin, Talk, Titandioxid, Zinkoxid, Zinkcarbonat, Satinweiß, Magnesiumcarbonat, Magnesiumsilikat, Magnesiumsulfat, Calciumsilikat, Aluminiumsilikat, Aluminiumhydroxid, Aluminiumoxidsol, Kolloid-Aluminiumoxid, Aluminiumoxidhydrat, Zeolit, Kieselerde, Kolloid-Kieselerde und einer Mischung davon, und eine auf Wasser basierende Emulsion eines wasser-unlöslichen Polymers umfasst, wobei die auf Wasser basierende Emulsion ausgewählt ist aus Vinylacetat-Emulsion, Ethylenvinylacetat-Emulsion, Acryl-Emulsion, Kieselerdeacryl-Emulsion, Urethan-Emulsion, Polyester-Emulsion, Chloroprenkautschuklatex, Butadienlatex, Isoprenkautschuklatex, Epoxidharz-Emulsion, einer Polyolefin-Emulsion, Fluorkohlenwasserstoffharz-Emulsion und Acrylsilicon-Emulsion.;
- Verdampfen von Lösungsmitteln, die im Tinten-Empfängermaterial vorhanden sind, um den porösen Tinten-Empfängerfilm auf dem Substrat zu bilden;
- Aufbringen einer Tintenlösung unter Verwendung eines Tintendrucker-Geräts auf den porösen Film, unter solchen Bedingungen, dass die Tintenlösung innerhalb des Films absorbiert wird;
- Erwärmen der optischen Linse, um die Sublimierung der Farbstoffe, die in der Tinte enthalten sind, und den Transfer der Farbe in das Substrat zu ermöglichen, bis das Substrat die gewünschte Tönung erlangt hat; und
- Entfernen des Tinten-Empfängerfilms.

2. Verfahren nach Anspruch 1, wobei der anorganische Füllstoff ausgewählt ist aus Kieselerde, Aluminiumoxid und Calciumcarbonat.

3. Verfahren nach einem der Ansprüche 1 bis 2, wobei der anorganische Füllstoff eine Partikelgröße von 0,05 µm bis 8 µm inklusive, aufweist.

4. Verfahren nach einem der Ansprüche 1 bis 3, wobei die auf Wasser basierende Emulsion eine Urethan-Emulsion ist.

5. Verfahren nach einem der Ansprüche 1 bis 4, wobei das Flüssigtinten-Empfängermaterial den anorganischen Füllstoff und die auf Wasser basierende Emulsion in einem Verhältnis von 1:0,1 bis 1:50 durch Gewicht umfasst.

6. Verfahren nach einem der Ansprüche 1 bis 5, wobei das Flüssigtinten-Empfängermaterial weiterhin ein wasserlösliches Polymer enthält.

7. Verfahren nach Anspruch 6, wobei das wasserlösliche Polymer ausgewählt ist aus Carboxmethylcellulose, Hydroxyethylcellulose, Methylcellulose, Polyvinylalkohol, Polyacrylsäure, Polyacrylsäure-Metallsalz, Polyacrylamid, Polyvinylpyrrolidon und Polyethylenglycol.

8. Verfahren nach Anspruch 7, wobei das wasserlösliche Polymer Polyvinylalkohol ist.

9. Verfahren nach einem der Ansprüche 1 bis 8, wobei das Flüssigtinten-Empfängermaterial weiterhin mindestens einen anorganischen Füllstoff, mindestens eine auf Wasser basierende Emulsion und mindestens ein wasserlösliches Polymer in einem Verhältnis anorganischer Füllstoff/ auf Wasser basierende Emulsion/ wasserlösliches Polymer von 1/0,1 bis 50/ 0 bis 50 jeweils umfasst.

10. Verfahren nach einem der Ansprüche 1 bis 9, wobei das Flüssigtinten-Empfängermaterial weiterhin einen oder mehrere Träger umfasst, die fähig sind, die Absorption der Tinte in das Substrat zu beschleunigen.

11. Verfahren nach Anspruch 10, wobei der oder die im Tinten-Empfängermaterial enthalten Träger, ausgewählt ist/sind aus *o-*Phenylphenol, Chlorbenzol, Methylsalicylat, Dimethylterephthalat, Butylbenzoat, Benzylalkohol und Phenetylalkohol.

12. Verfahren nach einem der Ansprüche 1 bis 11, wobei das Flüssigtinten-Empfängermaterial weiterhin ein modifiziertes kationisches Polymer umfasst, wobei das modifizierte kationische Polymer aus der Polymerisation oder Copolymerisation von Monomeren mit einer quaternären Ammonium-Seitenkette erhalten wird.

13. Verfahren nach einem der Ansprüche 1 bis 12, wobei das Beschichten durch ein Verfahren ausgewählt aus Rotations-beschichtung, Tauchbeschichtung und Sprühen durchgeführt wird.

14. Verfahren nach einem der Ansprüche 1 bis 13, wobei das Verdampfen von Lösungsmitteln einen ersten Lufttrocknungs-schritt bei Raumtemperatur einschließt; gefolgt von einem Erwärmungs-Schritt bei einer Temperatur von 40°C bis 100°C für 0,5 min bis 10 min.

15. Verfahren nach einem der Ansprüche 1 bis 14, wobei der auf dem Substrat gebildete Tinten-Empfängerfilm eine Dicke von 0,1 µm bis 50 µm aufweist.

16. Verfahren nach Anspruch 15, wobei der auf dem Substrat gebildete Tinten-Empfängerfilm eine Dicke von 2 µm bis 25 µm aufweist.

17. Verfahren nach Anspruch 17, wobei der auf dem Substrat gebildete Tinten-Empfängerfilm eine Dicke von 5 µm aufweist.

18. Verfahren nach Anspruch 1, wobei der Abstand zwischen der Substratoberfläche und der Tintendruckerdüse des Tintendruckergeräts zwischen 0,5 mm bis 5,0 mm beträgt.

19. Verfahren nach Anspruch 18, wobei der Abstand zwischen der Substratoberfläche und der Tintendruckerdüse des Tintendruckergeräts 1 mm bis 2 mm beträgt.

20. Verfahren nach Anspruch 1, wobei der Erwärmungsschritt bei normalem Druck oder unter Vakuumdruck-bedingungen durchgeführt wird.

21. Verfahren nach Anspruch 20, wobei der Druck geringer als 300 Pa ist.

22. Verfahren nach Anspruch 20, wobei der Druck geringer als 100 Pa ist.

23. Verfahren nach einem der Ansprüche 20 bis 22, wobei der Erwärmungsschritt bei einer Temperatur von 90 °C bis 240 °C durchgeführt wird, für eine Dauer die 10 Sekunden bis 2 Stunden beträgt.

24. Verfahren nach Anspruch 23, wobei der Erwärmungsschritt bei einer Temperatur von 120 °C bis 180 °C durchgeführt wird, während einschließlich 30 min bis 60 min.

25. Verfahren nach Anspruch 1, wobei das Entfernen des Tinten-Empfängerfilms dadurch erfolgt, dass er mit einer Lösung ausgewählt aus Wasser, Säurelösung und Baselösung abgewischt oder abgewaschen wird, wobei das Waschen gegebenenfalls mit Ultraschall-Reinigung kombiniert werden kann.

26. Verfahren nach Anspruch 1, weiterhin umfassend die folgenden Schritte:
- Beschichten des Substrats der optischen Linse mit einem transparenten Grundierungsfilm;
- Trocknen der Grundierung.

27. Verfahren nach Anspruch 26, wobei die transparente Grundierung umfasst: eine selbstemulgierbare Emulsion eines linearen Polyurethans und/oder wasserkompatiblen Polyesterharzes; und Metalloxid-Kolloidpartikel, welche feine Partikel sind, wobei mindestens eines ausgewählt ist aus Aluminiumoxid, Eisenoxid, Zinnoxid, Zirconiumoxid, Kieselerdeoxid, Titanoxid, Wolframoxid, Antimonoxid und deren Verbundoxide.

28. Verfahren nach Anspruch 27, wobei die Metall-Kolloidpartikel durch eine organische Silanverbindung der Formel:
R(R₁)ₐSiX_{b}
modifiziert sind,
wobei:
- R eine lineare oder verzweigte (C₁-C₆)Alkylgruppe darstellt, welche gegebenenfalls mit einer Gruppe ausgewählt aus Methacryloxy und Glycidyloxy substituiert sein kann;
- R₁ eine lineare oder verzweigte (C₁-C₆)Alkylgruppe darstellt;
- a ausgewählt ist aus 0, 1 und 2; und
- b ausgewählt ist aus 1, 2 und 3, mit der Maßgabe, dass a+b = 3.

29. Verfahren nach Anspruch 28, wobei die transparente Grundierung eine Filmdicke von 0,1 µm bis 100 µm hat.

## Revendications

1. Procédé pour teinter une lentille optique, comprenant
- le revêtement du substrat de ladite lentille optique avec une couche d'un matériau récepteur d'encre liquide capable de former un film poreux récepteur d'encre, ledit matériau récepteur d'encre liquide comprenant une charge minérale choisie parmi le carbonate de calcium léger, le carbonate de calcium lourd, le kaolin, le talc, le dioxyde de titane, l'oxyde de zinc, le carbonate de zinc, le blanc satin, le carbonate de magnésium, le silicate de magnésium, le sulfate de magnésium, le silicate de calcium, le silicate d'aluminium, l'hydroxyde d'aluminium, le sol d'alumine, l'alumine colloïdale, l'hydrate d'alumine, les zéolites, la silice, la silice colloïdale, et des mélanges de ceux-ci, et une émulsion à base d'eau d'un polymère insoluble dans l'eau, ladite émulsion à base d'eau étant choisie parmi une émulsion d'acétate de vinyle, une émulsion d'éthylène/acétate de vinyle, une émulsion acrylique, une émulsion silice acrylique, une émulsion d'uréthane, une émulsion polyester, un latex de caoutchouc chloroprène, un latex butadiène, un latex de caoutchouc isoprène, une émulsion de résine époxy, une émulsion de polyoléfine, une émulsion de résine fluorocarbonée et une émulsion silicone acrylique ;
- l'évaporation des solvants présents dans le matériau récepteur d'encre de manière à former sur ledit substrat ledit film poreux récepteur d'encre ;
- l'application d'une solution d'encre au moyen d'une machine de jet d'encre sur ledit film poreux, dans des conditions telles que la solution d'encre soit absorbée par le film ;
- le chauffage de ladite lentille optique de manière à permettre la sublimation des colorants contenus dans l'encre et le transfert de la couleur vers le substrat jusqu'à ce que le substrat ait atteint la teinte souhaitée, et
- l'élimination du film récepteur d'encre.

2. Procédé selon la revendication 1, dans lequel la charge minérale est choisie parmi la silice, l'alumine et le carbonate de calcium.

3. Procédé selon l'une quelconque des revendications 1 à 2, dans lequel la charge minérale a une taille de particules comprise entre 0,05 µm et 8 µm, ces bornes étant incluses.

4. Procédé selon l'une quelconque des revendications 1 à 3, dans lequel l'émulsion à base d'eau est une émulsion d'uréthanne.

5. Procédé selon l'une quelconque des revendications 1 à 4, dans lequel le matériau récepteur d'encre liquide comprend la charge minérale et l'émulsion à base d'eau en un rapport en poids de 1 : 0,1 à 1 : 50.

6. Procédé selon l'une quelconque des revendications 1 à 5, dans lequel le matériau récepteur d'encre liquide comprend en outre un polymère soluble dans l'eau.

7. Procédé selon la revendication 6, dans lequel le polymère soluble dans l'eau est choisi parmi la carboxyméthylcellulose, l'hydroxyéthylcellulose, la méthylcellulose, le poly(alcool vinylique), le poly(acide acrylique), les sels métalliques de poly(acide acrylique), le polyacrylamide, la poly(vinylpyrrolidone) et le polyéthylèneglycol.

8. Procédé selon la revendication 7, dans lequel le polymère soluble dans l'eau est le poly(alcool vinylique).

9. Procédé selon l'une quelconque des revendications 1 à 8, dans lequel le matériau récepteur d'encre liquide comprend en outre au moins une charge minérale, au moins une émulsion à base d'eau et au moins un polymère soluble dans l'eau avec un rapport charge minérale/émulsion à base d'eau/polymère soluble dans l'eau respectivement de 1/0,1 à 50/0 à 50.

10. Procédé selon l'une quelconque des revendications 1 à 9, dans lequel le matériau récepteur d'encre liquide comprend en outre un ou plusieurs véhicules capables d'accélérer l'absorption de l'encre dans le substrat.

11. Procédé selon la revendication 10, dans lequel le ou les véhicules compris dans le matériau récepteur d'encre est/sont choisi(s) parmi l'o-phénylphénol, le chlorobenzène, le salicylate de méthyle, de téréphtalate de diméthyle, le benzoate de butyle, l'alcool benzylique et l'alcool phénéthylique.

12. Procédé selon l'une quelconque des revendications 1 à 11, dans lequel le matériau récepteur d'encre liquide comprend en outre un polymère cationique modifié, ledit polymère cationique modifié étant obtenu par polymérisation ou copolymérisation de monomères portant une chaîne latérale porteuse d'un groupe ammonium quaternaire.

13. Procédé selon l'une quelconque des revendications 1 à 12, dans lequel le revêtement est déposé selon une technique choisie parmi le revêtement par centrifugation, le revêtement par immersion et la pulvérisation.

14. Procédé selon l'une quelconque des revendications 1 à 13, dans lequel l'évaporation des solvants comprend une première étape de séchage à l'air à température ambiante, suivie d'une étape de chauffage à une température comprise entre 40 °C et 100 °C pendant 0,5 à 10 minutes.

15. Procédé selon l'une quelconque des revendications 1 à 14, dans lequel le film récepteur d'encre formé sur le substrat a une épaisseur comprise entre 0,1 µm et 50 µm.

16. Procédé selon la revendication 15, dans lequel le film récepteur d'encre formé sur le substrat a une épaisseur comprise entre 2 µm et 25 µm.

17. Procédé selon la revendication 16, dans lequel le film récepteur d'encre formé sur le substrat a une épaisseur de 5 µm.

18. Procédé selon la revendication 1, dans lequel 1 distance entre la surface du substrat et la buse de jet d'encre de la machine d'impression par jet d'encre est comprise entre 0,5 mm et 5,0 mm.

19. Procédé selon la revendication 18, dans lequel la distance entre la surface du substrat et la buse de jet d'encre de la machine d'impression par jet d'encre est comprise entre 1 mm et 2 mm.

20. Procédé selon la revendication 1, dans lequel l'étape de chauffage est mise en oeuvre à pression normale ou sous pression réduite.

21. Procédé selon la revendication 20, dans lequel la pression est inférieure à 300 Pa.

22. Procédé selon la revendication 20, dans lequel la pression est inférieure à 100 Pa.

23. Procédé selon l'une quelconque des revendications 20 à 22, dans lequel l'étape de chauffage est mise en oeuvre à une température comprise entre 90 °C et 240 °C pendant une durée comprise entre 10 secondes et 2 heures.

24. Procédé selon la revendication 23, dans lequel l'étape de chauffage est mise en oeuvre à une température comprise entre 120 °C et 180 °C, pendant une durée de 30 à 60 minutes, bornes incluses.

25. Procédé selon la revendiation 1, dans lequel l'élimination du film récepteur d'encre se fait par essuyage ou par lavage avec une solution choisie parmi l'eau, une solution acide, une solution basique, ledit lavage étant éventuellement combiné avec un nettoyage par ultrasons.

26. Procédé selon la revendication 1, comprenant en outre les étapes suivantes :
- revêtement du substrat de ladite lentille optique avec un film de primaire transparent,
- séchage dudit film de primaire.

27. Procédé selon la revendication 26, dans lequel le primaire transparent comprend : une émulsion auto-émulsionnante d'un polyuréthane linéaire et/ou d'une résine polyester hydrocompatible, et des particules colloïdales d'oxyde métallique qui sont de fines particules choisies parmi au moins l'un des suivants : l'oxyde d'aluminium, l'oxyde de fer, l'oxyde d'étain, l'oxyde de zirconium, l'oxyde de silicium, l'oxyde de titane, l'oxyde de tungsten, l'oxyde d'antimoine et les oxydes composites de ceux-ci.

28. Procédé selon la revendication 27, dans lequel les particules colloïdales métalliques sont modifiées par un silane organique de formule :
R(R₁)ₐSiX_{b}
où
R représente un groupe alkyle en C₁₋₆ linéaire ou ramifié qui peut être substitué par un groupe choisi parmi méthacryloxy et glycidyloxy,
R₁ représente un groupe alkyle en C₁₋₆linéaire ou ramifié,
a est choisi parmi 0, 1 et 2, et
b est choisi parmi 1, 2 et 3, avec la condition supplémentaire que a + b = 3.

29. Procédé selon la revendication 28, dans lequel le primaire transparent a une épaisseur de film comprise entre 0,1 µm et 100 µm.
